# EUROPEAN PATENT SPECIFICATION

(11) **EP 0 298 659 B1**
(45) Date of publication and mention of the grant of the patent: **04.01.1995**
(21) Application number: 88305952.9
(22) Date of filing: 30.06.1988
(51) Int. Cl.: B05D 1/00, B05D 3/02, B32B 15/08, B32B 17/08, B05D 5/10, B32B 31/12, B32B 17/06

(54) **Method of manufacturing articles including thermosetting- powder surface-coatings**
Verfahren zur Herstellung von Gegenständen mit in Wärme aus- härtenden Pulverbeschichtungen
Procédé pour la fabrication des articles revêtus de poudre thermodurcissable

(30) Priority: 10.07.1987 GB 8716242
(43) Date of publication of application: 11.01.1989
(73) Proprietor: CHELSEA ARTISANS (1991) LIMITED, Hersham, Surrey KT12 3PU (GB); IMPERIAL CHEMICAL INDUSTRIES PLC, London SW1P 3JF (GB)
(72) Inventor: Leach, Roger John, East Molesey Surrey KT8 9DR (GB); Lindsay, James Fairbairn, Tamworth Staffordshire B78 3PL (GB)
(74) Representative: Coles, Graham Frederick

(56) References cited:
- GB-A- 1 430 484
- US-A- 3 580 796

## Description

This invention relates to methods of manufacturing an article that includes a bond between two components one of which is a glass sheet, in which an organic powder material that is applied to a surface of a first of the two components is heated, and the molten powder adheres both to this surface and a surface of the second component so as to form, on cooling, a fused interlayer between the two components bonding them together.

Methods of this kind are known from GB-A-1430484, and use a thermoplastic material in powder form for bonding two glass sheets together as a laminate. The heating is carried out with the powder material, or an airpermeable sintered form of it, sandwiched between the two component-sheets. Air is withdrawn from between the two sheets before heating commences and for at least an initial period of melting of the thermoplastic material. Pressure is applied to urge the two sheets towards one another while the air is being withdrawn and the molten material wets the two sheets to result, on cooling, in a thermoplastic layer bonding the two sheets together.

It is an object of the present invention to provide a method of the kind specified which is simpler and of wider application than the known methods.

According to the present invention a method of the kind specified is characterised in that the powder material is a thermosetting powder-coating material, and that the method includes the step of bringing about contact between the surface of the second component and the powder material only while that material is in the molten condition prior to curing, and that this contact is maintained during curing of the powder material.

The present invention is distinguished from the methods disclosed in GB-A-1430484 in that the powder material used is thermosetting rather than thermoplastic. This feature of the invention is of particular importance in situations where the glass sheet of the article is to be used in an architectural context, for example in the provision of a spandrel panel for cladding a building externally. The effect of sunshine on such a panel can readily cause the temperature of the glass to reach a value for which use of a thermoplastic bond would result in delamination, glass breakage and consequent danger to life. The use of thermosetting material overcomes this disadvantage, and whereas US-A-3580796 describes a method of manufacturing a glass laminate that is resistant to failure of the interlayer bond when exposed to sunshine, such method has the disadvantage that the bonding material is applied as a liquid. The use in accordance with the present invention of a powder-coating material rather than a liquid, has significant practical advantages in application and control.

The method of the present invention is of especial advantage over the methods described in GB-A-1430484 in that the complicated process of removing air from between the components, with its requirement for an enclosing frame and source of suction, is completely avoided. Rather than sandwiching the powder material between the two components before heating takes place, the contact of one of the components with that material takes place only after the material has become molten, so that air extraction is unnecessary for the wetting of that component.

The component bonded to the glass sheet, which may be of metal or glass, may be of sheet form. The method of the present invention in this respect is readily adapted to the establishment of bonds over large sheetareas in a way not possible with the methods disclosed in GB-A-1430484 and in US-A-3580796. More especially, it has been found that the invention is of significant advantage in the provision of glass cladding for both exterior and interior architectural purposes.

In the latter respect, the coating is advantageously applied to the back surface of the glass, so that whether the glass is clear or otherwise, pigmentation of the coating is revealed through the glass to give the effect of colour in the glass. Moreover, powder-coating materials having different pigmentations may be applied to different parts of the surface of the glass sheet such as to give the effect of different colours in the different parts of the glass. However, where no pigmentation is used, and/or depending on the transparency of the coating, the component bonded to the back of the coating may also contribute to the visual effect in the glass.

Even where colouration or other decorative effect is not sought, particular advantage is obtainable in another respect if the backing component bonded with the coating is of thermally-conductive material, for example aluminium foil, and covers the coating surface to a substantial extent, since such component will then have the effect of tending to equalize temperature across the glass sheet. This facilitates the use of annealed glass in contexts where it would not otherwise be acceptable or possible to use it, especially for architectural coloured-glass cladding.

The glass conventionally used for architectural cladding, is toughened, and this precludes cutting to size, and ease of fitting, on site; toughened glass is used in order to withstand temperature gradients, and also to resist impact without splintering dangerously. Use of annealed glass instead of toughened, would be preferred, since such glass is cheaper and can be cut on site, but annealed glass does not in general withstand temperature gradients and provide adequate resistance to impact, within the normal safety criteria.

The present invention makes it possible for this preference to be exercised, in particular because the use of a thermally-conductive sheet as the component bonded to the back of the powder coating applied to the glass, can be effective to reduce temperature gradients across the glass to an extent adequate to allow annealed glass to be used in a wide range of architectural environments. The fact that colour or other decorative effect can readily be provided, as referred to above, in such glass, has an additional advantage in this context, since requirement for colour or other decorative effect in cladding-glass would normally make use of toughened glass essential.

In a particularly notable aspect, the invention provides a method of manufacturing an architectural panel that has a glass facing sheet backed by a sheet of metal foil, in which an organic powder material that is applied to a back surface of the glass sheet is heated, and the molten powder adheres both to this surface and a surface of the metal-foil sheet to form, on cooling, a fused interlayer between the glass and metal-foil sheets bonding them together. GB-A-1430484 describes a method for forming a glass laminate which has a fused interlayer and may be used for construction or architectural purposes, and which makes use of metal foil that is in contact with the interlayer bond, for decorative effect. However, this prior-described method still has the disadvantages identified generally above, making implementation of an architectural panel of significant size and safety very difficult.

The method of the present invention overcomes, or at least significantly reduces, this difficulty. More particularly, the present invention provides a method of manufacturing an architectural panel of the nature referred to in the preceding paragraph, which is characterised in that the material is a thermosetting powder-coating material, that the method includes the step of bringing about contact between the surface of the metal-foil sheet and the powder material only while that material is in the molten condition prior to curing, and that this contact is maintained during curing of the powder material. The method of manufacturing an architectural panel in this manner is applicable to toughened glass as well as to annealed glass, but, as indicated above, the application to annealed glass has special advantage.

Resistance to impact and thermal shock of the glass can be enhanced to a very substantial degree - especially where annealed glass is used - by bonding an open-cell material in the form, for example, of a flexible and compressible foamed plastics or rubber layer, to the backing sheet. A rigid board of, for example, wood or foamed plastics, may be bonded behind this latter layer to give added strength to the panel.

In the method of the present invention as presented generally and specifically above, an adhesion promoter may be used to pre-coat the surface that is to receive application (for example, electrostatically) of the powder-coating material. The promoter may be a silane, and in this respect may be applied as a solution of the silane in a blend of water with isopropanol or another alcohol. The silane may be an organosilane ester, and the thermosetting material may include a polyester resin and contain a catalyst with a triglycidyl-isocyanurate curing agent.

Methods of manufacturing articles, in accordance with the present invention, will now be described by way of example, with reference to the accompanying drawings, in which:
Figure 1 is a perspective view of part of an architectural panel manufactured by a method in accordance with the present invention;
Figure 2 is a schematic representation of part of a production line for manufacturing the architectural panel of Figure 1 using a method according to the present invention;
Figure 3 is illustrative of modification of the panel of Figure 1;
Figure 4 illustrates another method of manufacture according to the present invention; and
Figures 5 and 6 are sectional side-views of further articles that are manufactured in accordance with the present invention.

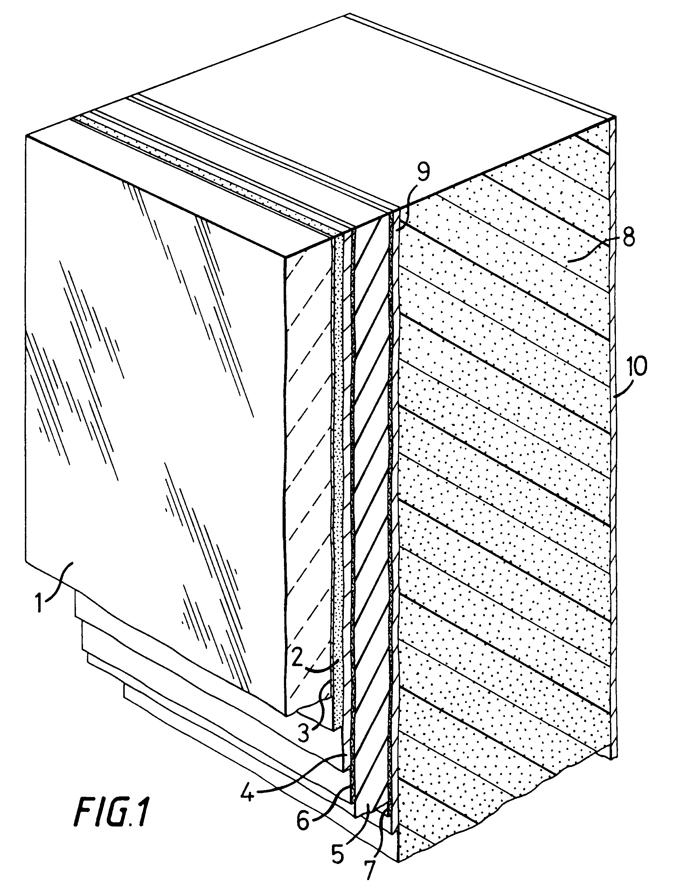

The architectural panel to be described with reference to Figure 1, is of a form suitable for use in providing glass cladding to exterior or interior walls of buildings. For this application, the panel is rectangular with glass-face dimensions of some 3 x 1.2 metres, and an overall thickness of some 28 millimetres; clearly panels of larger or smaller dimensions can be provided.

Referring to Figure 1, the panel is faced by a sheet 1 of clear, annealed glass having a thickness of 4 millimetres. The glass sheet 1 is backed by a cured polyester powder-coating 2 bonded to the sheet 1 via an interlayer 3 of silane adhesion-promoter. The interlayer 3 is very thin (perhaps only one molecule thick), and the coating 2, which has a thickness in the range from 60 to 120 microns, contains a pigment to show colour in the glass facing and give the visual effect of coloured glass to the cladding panel.

The coating 2 has a backing of aluminium foil 4 that is bonded to the sheet 1 via the coating 2 in the process of stoving the polyester powder-coating 2 on the glass sheet 1. The foil 4 has a nominal thickness of 0.1 millimetre, and being of good thermal conductivity, serves to equalize temperature variations across the panel. The function of the foil 4 in this latter regard is important in the context of the use of annealed glass, which is less resistant to temperature gradients than toughened glass, especially in exterior applications where part of the panel may be in sunlight and part in shadow. However, the foil 4 also has a protective function in relation to the general porosity of the coating 2, the foil 4 in this regard protecting the coating 2 against degradation from moisture and weathering generally; the nature of the intimate bond obtained according to the invention, between the coating 2 and the foil 4, without the need for introduction of an adhesive interlayer between them, is especially advantageous.

Even to the limited extent that the panel of Figure 1 has so far been described, it is capable of being used for cladding purposes, whether in the form of large sheets as described, or smaller tiles. In particular, the use of annealed glass enables the panel to be readily cut to size on site, but the usefulness of the panel, in particular its capability of resisting impact and thermal shock, is greatly enhanced by the addition, as illustrated in Figure 1, of an element 5 of flexible and compressible open-celled foamed plastics or rubber material, bonded to the back of the aluminium foil 4. The element 5 is in the form of a layer of some 3 millimetres in thickness, and has both faces covered by layers 6 and 7 of finely-woven or knitted nylon mesh that has been flame-welded to the layer 5; the mesh serves to stabilize the layer during its bonding into the panel. A rigid board 8 of foamed polyurethane and/or polyisocyanurate or phenolic resin, faced with sheets 9 and 10 of aluminized paper or glass fibre, is bonded to the element 5 via the facing layer 7, to add rigidity and further damage-protection to the panel without detracting from the ease of cutting and fitting on site.

As indicated above, the foil 4 has a significant effect in equalizing temperature variations across the panel, as well as providing protection for the coating 2. Incorporation of the open-cell element 5 into the panel to back the foil 4, not only significantly enhances the resistance of the glass to impact, but also adds further to its ability to withstand temperature differential between adjacent areas of the glass. The open-cell structure tends to promote the dispersion of heat across the glass, and thereby tends to reduce temperature gradients, by retarding movement of hot gas away from the foil 4 and enhancement of its movement across the back of the panel.

Tests with annealed glass have indicated that the capacity of the glass to withstand temperature differential was increased by some 80 to 90 degrees Celsius when provided with the coating 2 and its foil 4 backed by the element 5. Furthermore, such tests have shown that as well as greatly increasing impact resistance of the glass, the construction reduces significantly the extent of splintering when the glass does eventually break.

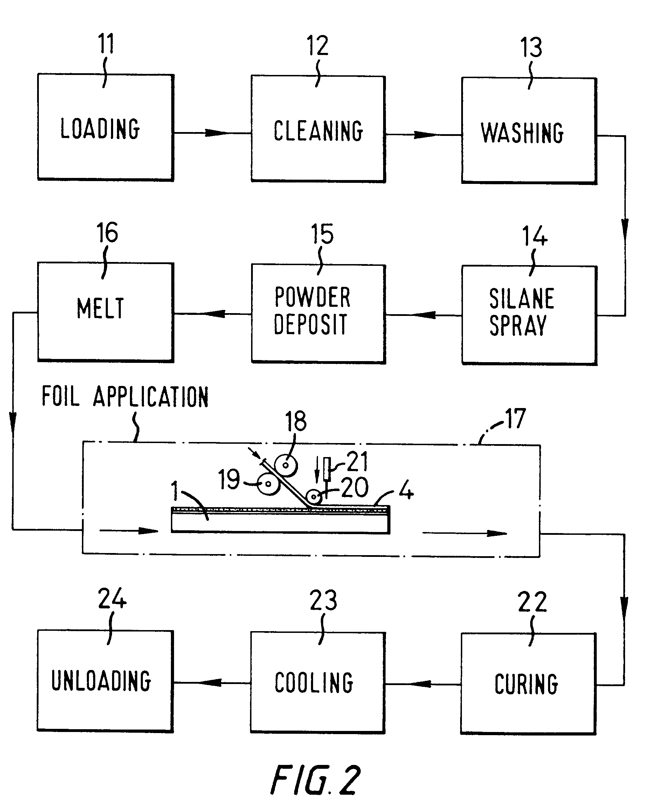

The method of manufacturing the panel will now be described with reference to Figure 2, which illustrates part of a production line for manufacturing panels of the form shown in Figure 1, in a continuous process. The manufacturing process will be described, and the production line is illustrated in Figure 2, only up to the stage at which the glass sheet 1 has been provided with the cured coating 2 and its aluminium foil-backing. The addition of the layer-element 5 and board 8, is carried out in essentially the same manner as the provision of like layers and boards for mirrors, described in UK Patent No 2,048,166, and will not be described here.

Referring to Figure 2, the sheet 1 of glass is loaded face down on a conveyor at the first station 11 of the production line, and is transferred by the conveyor to a cleaning station 12 where all loose debris is removed from both faces of the sheet 1 by means of a vacuum cleaner. The sheet 1 then passes on the conveyor through a washing station 13 where its upper, back, surface is sprayed with a solution of isopropanol and distilled water, and scrubbed by rotating brushes to remove all dirt, before being wiped or air-blown dry of excess solution.

From the washing station 13, the glass sheet 1 passes into a spray station 14 where the upper surface of the sheet 1 is sprayed with a fine mist of a solution of silane in a blend of isopropanol and distilled water. As the sheet 1 leaves the station 14, warm air is directed at the glass to dry the glass surface and leave it coated with the thin interlayer 3 of silane, before the sheet 1 passes to the next, powder-deposit station 15.

The station 15 includes provision for electrostatic or tribostatic deposition of polyester powder-coating material on the silane-coated upper surface of the sheet 1. The powder, which is the milled product of extruding a melted mixture of a polyester resin, cross-linking agents and pigments, is deposited on the upper surface of the sheet 1 evenly, and to a depth within the range 60 to 120 microns, by regulating the uniformity and speed of progress of the sheet 1 through the station 15. As the sheet 1 leaves the station 15, the lower, front face of the glass is brush- and vacuum-cleaned to ensure that none of the powder remains on this face.

The sheet 1 now enters a melt station 16 where infra-red heaters maintain a temperature in the range 150 to 170 degrees Celsius, so as to melt the powder. The heat is applied uniformly across the whole body of powder for a period of some two minutes before the sheet 1 moves to a foil-application station 17 for receiving the sheet of aluminium foil 4. In this regard, foil is dispensed from a supply roll (not shown) onto the melted powder via heated silicone-coated rollers 18 and 19; the heating of the rollers 18 and 19 is sufficient to avoid any condensation on the foil. The sheet 1 is stopped momentarily as the leading edge of the foil is brought down onto the leading edge of the melt under a roller 20, and is then carried forward with the foil pressed downwardly by the roller 20 into surface contact with the layer of melted powder. The downward pressure is maintained as the foil is fed at an angle onto the moving melt-surface under the roller 20, so as to ensure that air which would otherwise be entrapped under the foil, is squeezed out. When the whole of the melt is covered, the sheet 1 stops momentarily again to allow a flying knife 21 to cut the foil at the trailing edge. This divides off from the supply web the element of foil, namely the foil 4, that now lies in full surface contact with the body of melted powder, and enables the sheet 1 to move out of the station 17 into a curing station 22.

The air temperature within the curing station 22 lies within the range of 210 to 230 degrees Celsius, so as to raise the temperature of the assembly of sheet 1, melted powder and foil 4, to some 200 degrees Celsius. The assembly is maintained at this level of temperature for ten minutes, in order to cure the powder and effect the bonding to the sheet 1 and foil 4. After this, the sheet 1 with its cured coating 2 and adhering foil 4, pass into a cooling station 23 and thence to an unloading station 24 for subsequent attachment of the backing element 5 and board 8, as required.

It has been found that the cured powder-coating 2 provides not only good colouration (according to the particular pigmentation used in the powder) for the visual effect in the glass, but also a strong bonding between the glass and the foil 4. Moreover, the manufacturing method described, has been found to result in a product which is free from air bubbles and ripples between the glass and coating, and between the coating and foil 4, and for which the colour-view in the glass is uniform and without blemish, across the full area of the front face of the panel. Reduction in the possibility of air or other gas bubbles affecting the coating can be achieved if the melting and curing stages of the method are carried out in a reduced-pressure or partial-vacuum atmosphere.

The particular powder-coating material preferred for use in the context of the panel described above, is a polyester resin containing a catalyst agent with a triglycidyl isocyanurate curing agent; the powders sold as PPL858G and PPH857G under the trade mark DURAPLAST by Holden Surface Coatings Ltd. of Birmingham, England, are appropriate in this respect. Such powders provide structures that not only have good bonding, but have also been found to be markedly resistant to the effects of humidity and of salt, sulphur dioxide and other pollutants in the atmosphere, and to sunlight.

Although the polyester/triglycidyl-isocyanurate powders have been found advantageous in the above context, other polyester powders, and epoxy-, acrylic- and polyurethane-based powders, may be applicable in appropriate circumstances. Powders combining a polyester resin with an epoxy curing agent have, in particular, been found to provide acceptable results.

The use of an adhesion promoter on the glass is desirable to facilitate a good bond with the powder coating; as indicated above, a silane has been used for this purpose. More especially, it has been found that an organosilane ester facilitates good bonding when applied in a solution containing 3 per cent by volume of the silane in a blend of isopropanol and distilled water for which the ratio of isopropanol to water is 4:1 by volume. Gamma-mercaptopropyltrimethoxysilane has been found especially effective when used in this way; the product sold under the Trade Mark UNION CARBIDE as Organofunctional Silane A-189 by Union Carbide Corporation is appropriate in this respect.

The foil used to back the powder coating is preferably an aluminium-alloy foil of hard temper that has been pre-treated by the rinse method with a mixed aluminium phosphate and chromium III phosphate primer. The use of a hard temper facilitates easy and clean cutting of the panel.

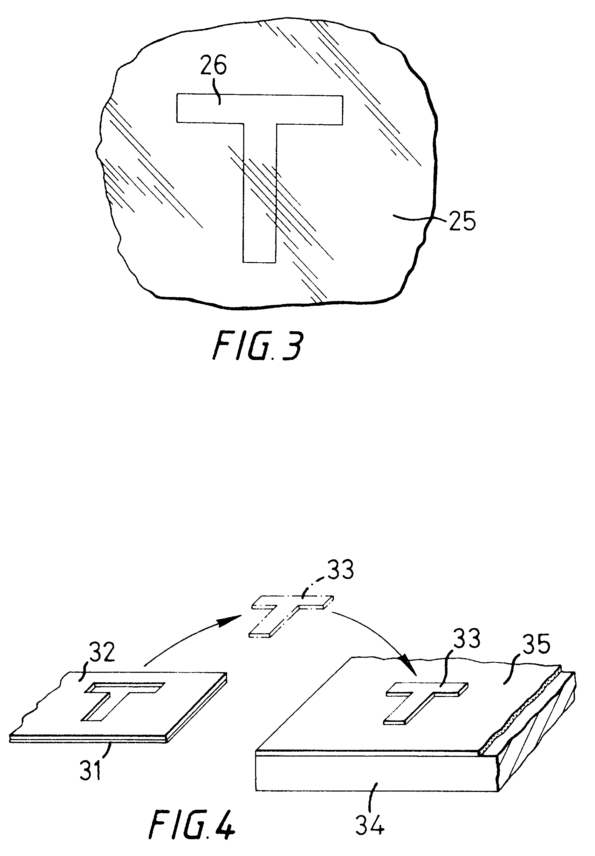

Various decorative effects beyond uniform colouration, can be readily obtained with a glass-faced panel constructed in the general manner described with reference to Figure 1. In particular, a combined mirror and colour effect can be achieved by sputtering or otherwise depositing a thin layer of metal on part or parts of the back surface of the glass prior to coating it with powder (for example, prior to entry into station 14 of the production line illustrated in Figure 2); the metallized part or parts give a mirror effect with the pigmentation of the cured powder-coating showing in the glass elsewhere. Alternatively or in addition, different pigmentations may be used in different areas, simply by depositing the differentlypigmented powders on the back surface of the glass where required (for example, within station 15 of the production line illustrated in Figure 2); there is minimal diffusion of pigmentation across the interface between powders during the melt and curing phases. Either (or both) of these techniques may be applied, for example, to the provision of distinctive lettering or other symbology in the glass, as will now be described with reference to Figure 3 which illustrates the letter T as this is both delineated on part of the back surface of the glass and is visible in the glass from the front.

Referring to Figure 3, metal is sputtered on the back surface of the glass throughout a region 25 which surrounds an area 26 that is free of metallization and delineates the letter T; alternatively, the metal may be sputtered onto the glass throughout the area 26 leaving the region 25 clear. In the first case, the view from the front of the panel will show the letter T in colour against a mirror background, where the powder-coating on the back surface shows through the area 26, whereas in the second case, the letter T will appear in mirror form against the colour background of the region 25.

The delineation of the letter T in the case of Figure 3, may, instead, be carried out at the powder-deposition stage of production by first depositing a powder of one pigmentation to cover the region 25 or the area 26, and then a powder of another pigmentation to cover the other; stencils may be used for achieving the required delineation of the different powders. The letter T will then be seen in distinctive colour against a coloured background in the finished panel.

Colour and other decorative effect in the glass need not be dependent wholly or partially on pigmentation of the powder coating. In particular, the pigment may be omitted from the coating powder in the panel of Figure 1, so as to result in a substantially transparent coating 2 which exposes the foil 4 to view from the front of the glass sheet 1. Thus colour and/or other decorative effect in the glass is realised in this case by what is visible on the bonded surface of the foil 4; this surface is readily coloured and/or otherwise decorated (for example, prior to supply to the foil-application station 17 of the production line of Figure 2), and use of this technique is of significantly wide potential application. Where the bonded surface is polished, a mirror effect is achieved, and any colour of that surface is then incorporated into the mirror.

The present invention, although particularly advantageous in the context of the provision of glass-faced panels for architectural or other purposes, is not limited to this context; an example of its wider application is illustrated in Figure 4, which illustrates the formation and application of decals to a powder-coated article. In particular, as illustrated in Figure 4, the decals themselves, may be of thermosetting powder-coating material.

Figure 4 illustrates the manner in which a decal in the shape of the letter T is derived and transferred to become part of the finished article.

Referring to Figure 4, a thermosetting organic coating-powder, for example of an epoxy or polyester resin, is first laid down on a substrate 31 and is then cured to form a coating 32. The substrate 31, for example of polytetrafluoroethylene, is chosen (or is otherwise treated) to be such that the coating 32 readily strips from it, and in particular such that an element 33 having a desired shape - which in the illustrated case is that of the letter T - can be cut from the coating 32 and removed. The element 33 is now used to provide the letter T as a decal on the upper face of a base member 34 of glass.

In the latter respect, the base member 34, after being treated with an adhesion promoter if necessary, is coated with a thermosetting organic coating-powder; this may be the same as that used for the coating 32 but with different pigmentation. The member 34 is now heated to melt the powder, and the element 33 is then applied to the melt in the location appropriate for the decal on the base member 34. Finally, after curing the powder, the whole is allowed to cool, leaving the element 33 firmly bonded in place on the now-formed coating of the base member 34.

The technique described with reference to Figure 4 has advantage in that the decal element 33 is firmly secured to the coated member 34 without the use of any adhesive, and resists attack by weather and wear. Also, a very distinctive effect can be obtained simply by using different pigments in the powders of coatings 32 and 35.

Where clear glass is used as the base member 34, the technique described with reference to Figure 4 may be modified to provide for viewing of the decal through the glass. The element 33 is in this case placed on the upper surface of the glass and the uncovered areas of that surface then treated with silane before the powder is applied over those areas and the element 33. Heating melts the powder and brings about full contact between it and the element 33, so that after further heating to cure the powder and subsequent cooling, the element remains firmly bonded in the coating.

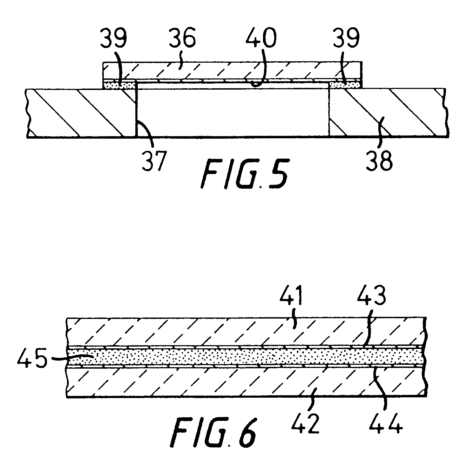

The method of the present invention may be applied as illustrated in Figures 5 and 6, to the bonding of glass over an aperture in a metal wall, and to the formation of a glass laminate, respectively.

Referring to Figure 5, a glass sheet 36 is located over an aperture 37 in a metal wall 38, the sheet being bonded to the wall 38 by cured powder-coating material 39; the coating 39 is shown confined to the margin of the aperture 37, but clearly it could extend across the whole of the wall face. In manufacture of this article, the contacting face of the sheet 36 is initially provided with a coat 40 of a silane adhesion-promoter, and an epoxy or other coating powder is applied around (at least) the margin of the aperture 37 of the wall 38. The powder is now heated to the melt phase, and the glass sheet 36 is placed over the aperture 37, silane-coated face down, into surface contact with the melt around the aperture margin. The sheet 36 is retained in this condition while the assembly is heated further to cure the powder and form the coating 39 bonding the glass sheet 36 to the wall 38, over the aperture 37.

In the example of Figure 6, two glass sheets 41 and 42, which have coats 43 and 44 respectively, of a silane adhesion promoter, are bonded together as a laminate by means of a polyester or other powder coating 45. Such a laminate is applicable, for example, where colour but opacity, or at least translucency, is required with glass facing on both sides of the laminate.

Manufacture is carried out by applying the powder for the coating 45 to the silane-prepared face of one of the sheets 41 and 42, melting the powder, contacting the melt across the whole area with the silane-prepared face of the other sheet, and maintaining such contact while the powder is cured. The likelihood of entrapping gas in the laminate can be reduced, by carrying out the steps of establishing contact of the glass with the melt, and also curing the powder, within a reduced-pressure atmosphere.

The thermosetting organic powder-coating materials that are suitable for use in the various embodiments of the invention described above, include polyester, epoxy-, acrylic- and polyurethane-based powders. Such powders may include, as well as pigments where appropriate, extenders in the form of mineral fillers, and flow modifiers.

The use of polyester/triglycidyl-isocyanurate powders has been described in the context of the embodiment of Figure 1, but as an alternative, a polyester resin with an epoxy curing agent may be used. The catalyst included may be typically choline chloride, stannous octoate, or tetrabutylammoniumbromide to a level typically from 0 to 0.2 per cent. Furthermore, an epoxy resin with a dicyandiamide curing agent may be used. All such powders may find application in the other embodiments described.

As regards adhesion promoter, the use of a silane, and in particular gamma-mercaptopropyltrimethoxysilane, is referred to in connection with the embodiment of Figure 1. As an alternative, gamma-aminopropyltriethoxysilane may be used, and these adhesion promoters are also applicable in the other embodiments described.

## Claims

1. A method of manufacturing an article that includes a bond between two components (1,4;33,34;41,42) one of which is a glass sheet (1;34;41), in which an organic powder material that is applied (15) to a surface of a first (1;34;41) of the two components (1,4;33,34;41,42) is heated (16), and the molten powder adheres both to this surface and a surface of the second component (4;33;42) so as to form, on cooling (23), a fused interlayer (2;35;45) between the two components (1,4;33,34;41,42) bonding them together, characterised in that the powder material is a thermosetting powder-coating material, and that the method includes the step (17) of bringing about contact between the surface of the second component (4;33;42) and the powder material only while that material is in the molten condition prior to curing (22), and that this contact is maintained during curing (22) of the powder material.

2. A method according to Claim 1 wherein the bond is between the glass sheet (1) and a metal component (4).

3. A method according to Claim 1 wherein both components (41,42) are of glass.

4. A method according to Claim 2 or Claim 3 wherein both components (1,4;41,42) are of sheet form.

5. A method according to Claim 1 wherein the bond is between the glass sheet (1) and an element of cured thermosetting powder-coating material (33).

6. A method according to any one of Claims 1 to 5 wherein the powder is applied (15) to the surface of the glass sheet (1) and the surface of this sheet (1) is coated (14) with an adhesion promoter (3) prior to application (15) of the powder-coating material.

7. A method of manufacturing an architectural panel that has a glass facing sheet (1) backed by a sheet (4) of metal foil, in which an organic powder material that is applied (15) to a back surface of the glass sheet (1) is heated (16), and the molten powder adheres both to this surface and a surface of the metal-foil sheet (4) so as to form, on cooling (23), a fused interlayer (2) between the glass and metal-foil sheets (1,4) bonding them together, characterised in that the material is a thermosetting powder-coating material, that the method includes the step (17) of bringing about contact between the surface of the metal-foil sheet (4) and the powder material only while that material is in the molten condition prior to curing (22), and that this contact is maintained during curing (22) of the powder material.

8. A method according to Claim 7 wherein the metal-foil sheet (4) is of aluminium.

9. A method according to Claim 7 or Claim 8 wherein the back surface of the glass sheet (1) is coated (14) with an adhesion promoter prior to application (15) of the powder material.

10. A method according to Claim 9 wherein the adhesion promoter (3) is a silane.

11. A method according to Claim 10 wherein the silane is applied (14) in solution with an alcohol-water blend.

12. A method according to Claim 10 or Claim 11 wherein the silane is an organosilane ester.

13. A method according to any one of Claims 7 to 12 wherein at least part (25) of the glass surface is metallized.

14. A method according to any one of Claims 7 to 13 wherein the thermosetting material is substantially transparent so that at least part of the coating-bonded surface of the metal-foil sheet (4) is viewable in the glass, through the interlayer (2).

15. A method according to any one of Claims 1 to 13 wherein the thermosetting material includes pigmentation to give a visual effect of colour in the glass (1).

16. A method according to Claim 15 wherein the step (15) of applying the powder-coating material involves the application of powder-coating materials having different pigmentations to different parts (25, 26) of the surface of the glass sheet (1) such as to give the effect of different colours in the different parts (25, 26) of the glass sheet (1).

17. A method according to any one of Claims 1 to 16 wherein the thermosetting material includes a polyester resin.

18. A method according to Claim 17 wherein the thermosetting material contains a catalyst with a triglycidyl-isocyanurate curing agent.

## Patentansprüche

1. Verfahren zum Herstellen eines Gegenstandes, mit einer Verbindung zwischen zwei Komponenten (1, 4; 33, 34; 41, 42), von denen eine eine Glasscheibe (1; 34; 41) ist, wobei ein organisches Pulvermaterial, das auf einer Oberfläche einer ersten (1; 34; 41) der zwei Komponenten (1, 4; 33, 34; 41, 42) aufgebracht (15) ist, erhitzt (16) wird, und das geschmolzene Pulver sowohl an dieser Oberfläche als auch an einer Oberfläche der zweiten Komponente (4; 33; 42) haftet, um durch Kühlung (23) eine schmelzgeformte Zwischenschicht (2; 35; 45) zwischen den zwei Komponenten (1, 4; 33, 34; 41, 42) zu bilden, die sie zusammenhält, dadurch gekennzeichnet, daß das Pulvermaterial ein in Wärme aushärtendes Pulver-Schichtmaterial ist, und daß das Verfahren den Schritt (17) aufweist, Inberührungbringen der Oberfläche der zweiten Komponente (4; 33; 42) mit dem Pulvermaterial nur während das Material vor dem Aushärten (22) geschmolzen ist, und Aufrechterhalten dieser Berührung während das Pulvermaterial aushärtet.

2. Verfahren nach Anspruch 1, wobei die Verbindung zwischen der Glasscheibe (1) und einer Metallkomponente (4) besteht.

3. Verfahren nach Anspruch 1, wobei beide Komponenten (41, 42) aus Glas bestehen.

4. Verfahren nach Anspruch 2 oder 3, wobei beide Komponenten (1, 4; 41, 42) eine flächige Form aufweisen.

5. Verfahren nach Anspruch 1, wobei die Verbindung zwischen der Glasscheibe (1) und einem Element eines ausgehärteten in Wärme aushärtenden Pulver-Schichtmaterials (33) besteht.

6. Verfahren nach einem der Ansprüche 1 bis 5, wobei das Pulver auf die Oberfläche der Glasscheibe (1) aufgebracht (15) wird und die Oberfläche dieser Scheibe (1) vor dem Aufbringen (15) des Pulver-Schichtmaterials mit einem Haftvermittler (3) beschichtet (14) wird.

7. Verfahren zur Herstellung einer Bauplatte mit einer Glasverkleidungsscheibe (1), die mit einer Lage (4) aus Metallfolie hinterlegt ist, wobei ein organisches Pulvermaterial, das auf einer rückseitigen Oberfläche der der Glasscheibe (1) aufgebracht ist, erhitzt wird, und das geschmolzene Pulver sowohl an dieser Oberfläche als auch an einer Oberfläche der Metallfolienlage (4) haftet, um durch Kühlung (23) eine schmelzgeformte Zwischenschicht (2) zwischen der Glasscheibe (1) und der Metallfolienlage (4) zu bilden, die diese zusammenhält, dadurch gekennzeichnet, daß das Material ein in Wärme aushärtendes Pulver-Schichtmaterial ist, daß das Verfahren den Schritt (17) aufweist, Inberührungbringen der Oberfläche der Metallfolienlage (4) mit dem Pulvermaterial nur während das Material vor dem Aushärten (22) geschmolzen ist, und Aufrechterhalten dieser Berührung während das Pulvermaterial aushärtet.

8. Verfahren nach Anspruch 7, wobei die Metallfolienlage (4) aus Aluminium besteht.

9. Verfahren nach Anspruch 7 oder 8, wobei die rückseitige Oberfläche der Glasscheibe (1) vor dem Aufbringen (15) des Pulvermaterials mit einem Haftvermittler beschichtet (14) wird.

10. Verfahren nach Anspruch 9, wobei der Haftvermittler (3) ein Silan ist.

11. Verfahren nach Anspruch 10, wobei das Silan in Lösung mit einer Alkohol-Wassermischung aufgebracht (14) wird.

12. Verfahren nach Anspruch 10 oder 11, wobei das Silan ein Organosilanester ist.

13. Verfahren nach einem der Ansprüche 7 bis 12, wobei mindestens ein Teil (25) der Glasoberfläche metallisiert ist.

14. Verfahren nach einem der Ansprüche 7 bis 13, wobei das in Wärme aushärtende Material im wesentlichen transparent ist, so daß mindestens ein Teil der mit einer Schicht überzogenen Oberfläche der Metallfolienlage (4) durch die Zwischenschicht (2) im Glas sichtbar ist.

15. Verfahren nach einem der Ansprüche 1 bis 13, wobei das in Wärme aushärtende Material eine Pigmentierung enthält, um dem Glas (1) einen optischen Farbeindruck zu verleihen.

16. Verfahren nach Anspruch 15, wobei der Schritt (15) des Aufbringens des Pulver-Schichtmaterials das Aufbringen von Pulver-Schichtmaterialien mit verschiedenen Pigmentierungen auf verschiedenen Teilen (25, 26) der Oberfläche der Glasscheibe (1) umfaßt, um somit der Glasscheibe (1) den Effekt von verschiedenen Farben in den verschiedenen Teilen (25, 26) zu verleihen.

17. Verfahren nach einem der Ansprüche 1 bis 16, wobei das in Wärme aushärtende Material ein Polyesterharz enthält.

18. Verfahren nach Anspruch 17, wobei das in Wärme aushärtende Material einen Katalysator mit einer Isocyanursäure-Triglycidylester als Härter enthält.

## Revendications

1. Procédé pour fabriquer un article qui comporte une liaison entre deux composants (1;4; 33,34; 41,42) dont l'un est une feuille de verre (1; 34; 41), procédé dans lequel un matériau en poudre organique, qui est appliqué (15) sur une surface d'un premier (1; 34; 41) des deux composants (1,4; 33,34; 41,42), est chauffé (16), et la poudre fondue adhère à la fois à cette surface et à une surface du deuxième composant (4; 33; 42) de façon à former, lors du refroidissement (23), une couche intermédiaire fondue (2; 35; 45) entre les deux composants (1,4; 33,34; 41,42) qui les lie ensemble, caractérisé en ce que le matériau en poudre est un matériau de revêtement en poudre thermodurcissable, en ce que le procédé comporte une étape (17) dans laquelle on amène en contact la surface du deuxième composant (4; 33; 42) et le matériau en poudre seulement pendant que ce matériau est à l'état fondu avant sa prise (22) et en ce qu'on maintient ce contact pendant la prise (22) du matériau en poudre.

2. Procédé selon la revendication 1, dans lequel la liaison a lieu entre la feuille de verre (1) et un composant métallique (4).

3. Procédé selon la revendication 1, dans lequel les deux composants (41,42) sont en verre.

4. Procédé selon la revendication 2 ou la revendication 3, dans lequel les deux composants (1,4; 41,42) sont en forme de feuille.

5. Procédé selon la revendication 1, dans lequel la liaison a lieu entre la feuille de verre (1) et un élément en un matériau de revêtement en poudre thermodurcissable prise (33).

6. Procédé selon l'une quelconque des revendications 1 à 5, dans lequel la poudre est appliquée (15) sur la surface de la feuille de verre (1 et la surface de cette feuille (1) est revêtue (14) d'un promoteur d'adhérence (3) avant application (15) du matériau de revêtement en poudre.

7. Procédé pour fabriquer un panneau architectural qui a une feuille de parement en verre (1) doublée par une feuille mince métallique (4), procédé dans lequel un matériau en poudre organique, qui est appliqué (15) sur la surface arrière de la feuille de verre (1), est chauffé (16), et la poudre fondue adhère à lafois à cette surface et à une surface de la feuille mince métallique (4) de façon à former, lors du refroidissement (23), une couche intermédiaire fondue (2) entre les feuilles de verre et de métal (1,4) qui les lie ensemble, caractérisé en ce que le matériau est un matériau de revêtement en poudre thermodurcissable, en ce que le procédé comporte une étape (17) dans laquelle on amène en contact la surface de la feuille mince métallique (4) et le matériau en poudre seulement pendant que ce matériau est à l'état fondu avant sa prise (22) et en ce qu'on maintient ce contact pendant la prise (22) du matériau en poudre.

8. Procédé selon la revendication 7, dans lequel la feuille mince métallique (4) est en aluminium.

9. Procédé selon la revendication 7 ou la revendication 8, dans lequel la surface arrière de la feuille de verre (1) est revêtue (4) d'un promoteur d'adhérence avant application (15) du matériau en poudre.

10. Procédé selon la revendication 9, dans lequel le promoteur d'adhérence (3) est un silane.

11. Procédé selon la revendication 10, dans lequel le silane est appliqué (14) en solution avec un mélange d'alcool et d'eau.

12. Procédé selon la revendication 10 ou la revendication 11, dans lequel le silane est un ester organosilanique.

13. Procédé selon l'une quelconque des revendications 7 à 12, dans lequel au moins une partie (25) de la surface du verre est métallisée.

14. Procédé selon l'une quelconque des revendications 7 à 13, dans lequel le matériau thermodurcissable est pratiquement transparent, de telle sorte qu'on peut voir au moins une partie de la surface liée au revêtement de la feuille mince métallique (4) dans le verre à travers la couche intermédiaire (2).

15. Procédé selon l'une quelconque des revendications 1 à 13, dans lequel le matériau thermodurcissable contient une pigmentation pour donner un effet visuel de couleur dans le verre (1).

16. Procédé selon la revendication 15, dans lequel l'étape (15) consistant à appliquer le matériau de revêtement en poudre implique l'application de matériaux ayant des pigmentations différentes sur différentes parties (25,26) de la surface de la feuille de verre (1) de façon à donner l'effet de couleurs différentes dans les différentes parties (25,26) de la feuille de verre (1).

17. Procédé selon l'une quelconque des revendications 1 à 16, dans lequel le matériau thermodurcissable est une résine polyester.

18. Procédé selon la revendication 17, dans lequel le matériau thermodurcissable contient un catalyseur avec un agent de prise à base d'isocyanurate de triglycidyle.
